# FASCICULE DE BREVET EUROPEEN

(11) **EP 1 176 036 B1**
(45) Date de publication et mention de la délivrance du brevet: **03.03.2004**
(21) Numéro de dépôt: 01117571.8
(22) Date de dépôt: 20.07.2001
(51) Int. Cl.: B60H 1/00

(54) **Dispositif de chauffage-climatisation de l'habitacle d'un véhicule automobile**
Kraftfahrzeugklimaanlage
Vehicle air-conditioning device

(30) Priorité: 28.07.2000 FR 0009992
(43) Date de publication de la demande: 30.01.2002
(73) Titulaire: VALEO CLIMATISATION, 78321 La Verrière (FR)
(72) Inventeur: Guyonvarch, Gwenael, 78120 Rambouillet (FR)

(56) Documents cités:
- US-A- 5 421 169
- US-A- 6 038 877

## Description

L'invention concerne un dispositif de chauffage-climatisation de l'habitacle d'un véhicule automobile comme indiqué dans le document US 5421169.

Dans la plupart des dispositifs de ce type, on prévoit un radiateur de chauffage qui, le plus souvent, est traversé par le fluide de refroidissement du moteur du véhicule, ainsi qu'un évaporateur faisant partie d'un circuit de climatisation parcouru par un fluide réfrigérant.

Généralement, l'évaporateur est placé en amont du radiateur de chauffage, en sorte qu'un même flux d'air puisse traverser successivement l'évaporateur et le radiateur de chauffage pour produire un flux d'air, à température réglée, qui est envoyé dans l'habitacle. L'envoi du flux d'air se fait généralement par l'intermédiaire d'un pulseur à régime variable qui permet de régler la vitesse et le débit du flux d'air envoyé dans l'habitacle.

Dans le cas où le radiateur de chauffage, encore appelé aérotherme, est parcouru par le fluide de refroidissement du moteur, il est monté dans une dérivation de ce circuit.

Il est connu aussi d'assurer le chauffage du flux d'air par un radiateur électrique qui peut soit se substituer, soit s'ajouter au radiateur de chauffage parcouru par le fluide de refroidissement du moteur.

Il est connu par ailleurs de se servir du circuit de fluide réfrigérant pour assurer non seulement la fonction de refroidissement ou climatisation de l'habitacle, mais aussi la fonction de chauffage.

En effet, un circuit de climatisation est constitué par un circuit fermé dans lequel un fluide réfrigérant circule centre un évaporateur où il passe de l'état liquide à l'état gazeux en recevant de la chaleur et un condenseur où il passe de l'état gazeux à l'état liquide en cédant de la chaleur. Ce circuit comprend en plus un compresseur placé entre l'évaporateur et le condenseur et un détendeur placé centre le condenseur et l'évaporateur.

Dans un circuit de climatisation classique, l'évaporateur absorbe de la chaleur, ce qui permet d'envoyer de l'air froid ou réfrigéré dans l'habitacle.

Par contre, le condenseur est généralement balayé par le même flux d'air que le radiateur de refroidissement du moteur, ce qui permet de produire un flux d'air chaud qui est dissipé en pure perte.

Il est connu aussi de se servir du circuit de climatisation pour le faire fonctionner dans un mode chauffage, dans lequel on fait fonctionner l'évaporateur comme un condenseur, pour produire de la chaleur.

En ce cas, un même échangeur de chaleur peut faire l'office soit d'évaporateur pour produire de l'air climatisé, soit de condenseur pour produire de l'air chaud.

Dans tous les cas, ces dispositifs de chauffage-climatisation sont de structure complexe.

En outre, dans le mode chauffage, ils tirent partie des pertes thermiques des moteurs thermiques conventionnels, alors que les moteurs modernes, du fait de leur meilleur rendement, ont des pertes thermiques réduites.

Il est nécessaire alors dans ce cas de prévoir souvent un radiateur de chauffage d'appoint, notamment lorsque le chauffage fonctionne avec le moteur froid ou avec une température extérieure très basse.

L'invention a notamment pour but de surmonter les inconvénients précités.

Elle vise en particulier à procurer un dispositif de chauffage-climatisation de structure plus simple et qui peut en outre fonctionner efficacement avec les véhicules modernes animés soit par un moteur thermique à haut rendement, soit encore par un moteur électrique.

L'invention propose à cet effet un dispositif de chauffage-climatisation de l'habitacle d'un véhicule automobile, lequel comprend en combinaison :
un circuit fermé dans lequel un fluide réfrigérant circule entre un évaporateur et un condenseur ;
un conduit de liquide froid, dit "conduit froid", en contact thermique avec l'évaporateur et un conduit de liquide chaud, dit "conduit chaud", en contact thermique avec le condenseur;
une première boucle parcourue par un liquide sous l'action d'une pompe et comprenant un échangeur de chaleur propre à être balayé par un fluide caloporteur, notamment par un flux d'air ;
une deuxième boucle parcourue par un liquide sous l'action d'une pompe et comprenant un échangeur de chaleur propre à être balayé par un flux d'air à envoyer dans l'habitacle ; et
des moyens de commutation comprenant deux vannes à quatre voies et interposés entre le conduit froid, le conduit chaud, la première boucle et la deuxième boucle et propres à être placés sélectivement : soit dans une position de chauffage dans laquelle la première boucle est en communication avec le conduit froid, tandis que la deuxième boucle est en communication avec le conduit chaud, soit dans une position de refroidissement dans laquelle la première boucle est en communication avec le conduit chaud, tandis que la deuxième boucle est en communication avec le conduit froid.

Ainsi, le chauffage ou le refroidissement de l'habitacle s'effectue au travers d'un échangeur de chaleur qui est intégré dans une boucle parcourue par un liquide, cette boucle pouvant être mise en communication sélectivement soit avec un conduit chaud en contact avec le condenseur, soit avec un conduit froid en contact avec l'évaporateur.

Ainsi, la température de l'air envoyé dans l'habitacle est réglée par un échangeur de chaleur du type air/liquide parcouru par un liquide (typiquement de l'eau) qui est soit échauffé au contact du condenseur, soit refroidi au contact de l'évaporateur.

C'est donc le circuit fermé de fluide réfrigérant qui permet directement d'ajuster la température du liquide et, par conséquent, celle du flux d'air envoyé dans l'habitacle.

Il en résulte une simplification de fabrication. En variante, il peut s'agir de deux vannes mélangeuses, ce qui permet de mélanger, en proportion réglable, le liquide chaud provenant du condenseur et le liquide froid provenant de l'évaporateur.

Avantageusement, le dispositif comprend un module qui inclut le circuit fermé de fluide réfrigérant, ainsi que le conduit froid et le conduit chaud.

Ainsi, ce module inclut avantageusement aussi le compresseur et le détendeur du circuit de fluide réfrigérant.

Il est avantageux que ce compresseur soit électrique.

Selon une autre caractéristique de l'invention, le dispositif comprend un pulseur associé à l'échangeur de chaleur de la deuxième boucle pour envoyer dans l'habitacle un flux d'air ayant balayé cet échangeur de chaleur.

Il peut être prévu en outre un radiateur additionnel propre à être échauffé par le moteur du véhicule, ce radiateur additionnel étant disposé à proximité de l'échangeur de chaleur de la deuxième boucle de manière à être traversé par un même flux d'air envoyé dans l'habitacle.

Il est avantageux que la deuxième boucle comprenne en outre au moins un échangeur de chaleur supplémentaire parcouru par le même liquide.

Il peut s'agir par exemple d'un échangeur intégré dans un siège du véhicule ou encore d'un échangeur intégré dans un panneau.

De préférence, l'échangeur de chaleur de la première boucle est distinct du radiateur de refroidissement du moteur du véhicule.

Bien entendu, il est possible aussi que cet échangeur de chaleur soit intégré au radiateur de refroidissement du moteur du véhicule.

Dans la description qui suit, faite seulement à titre d'exemple, on se réfère aux dessins annexés, sur lesquels :
- la figure 1 est une vue schématique d'un dispositif de chauffage-climatisation de l'habitacle d'un véhicule automobile selon l'invention, représenté dans une position de chauffage ;
- la figure 2 est une vue analogue à la figure 1 dans laquelle le dispositif est représenté dans une position de refroidissement ; et
- la figure 3 est une représentation schématique d'un dispositif de chauffage-climatisation dans une variante de réalisation.

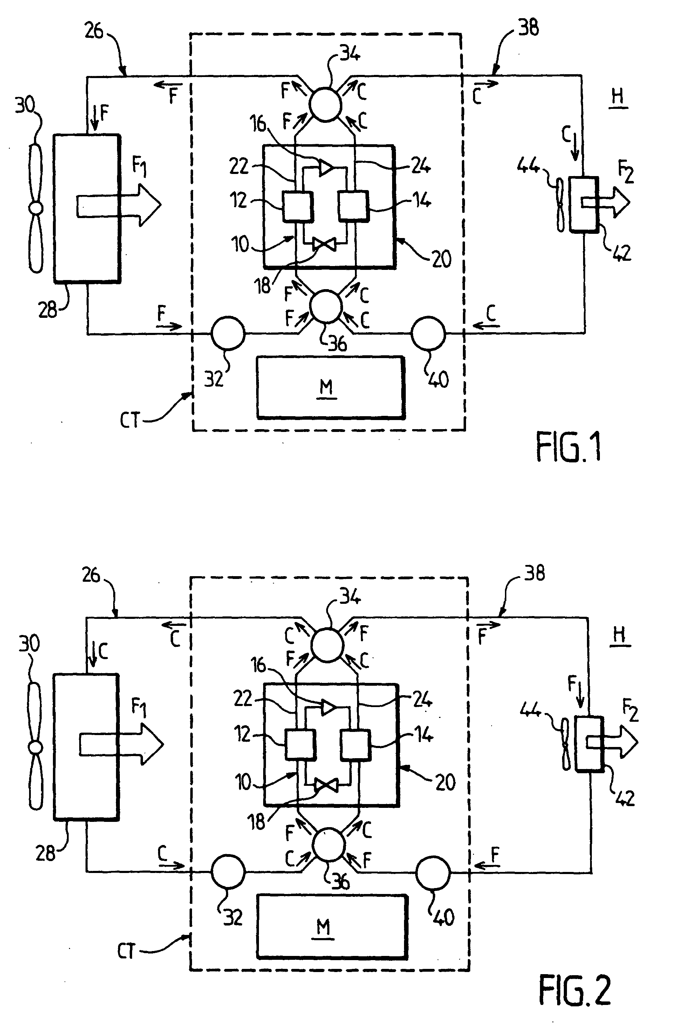

Le dispositif de chauffage-climatisation représenté schématiquement sur la figure 1 est destiné au chauffage de l'habitacle H d'un véhicule automobile. Il comprend un circuit fermé 10 parcouru par un fluide réfrigérant qui circule entre un évaporateur 12 où il passe de l'état liquide à l'état gazeux en recevant de la chaleur et un condenseur 14 où il passe de l'état gazeux à l'état liquide en cédant de la chaleur. Ce circuit fermé comprend en outre un compresseur 16 placé entre l'évaporateur 12 et le condenseur 14 et un détendeur 18 placé entre le condenseur 14 et l'évaporateur 12. On constitue ainsi un circuit fermé, encore appelé circuit de climatisation, dans lequel l'évaporateur absorbe de la chaleur et "produit du froid", tandis que le condenseur cède de la chaleur et "produit du chaud".

Ce circuit fermé peut comprendre en outre un bouteille filtrante/déshydratante, un échangeur interne, un accumulateur, des pressostats, des capteurs de température, etc.

Le fluide réfrigérant peut être, par exemple, le fluide connu sous la dénomination "R134a", du dioxyde de carbone, un hydrocarbure, etc.

Conformément à l'invention, le circuit fermé 10 est logé à l'intérieur d'un module 20 qui est lui-même disposé à l'intérieur d'un compartiment technique CT distinct de l'habitacle H du véhicule.

Dans le module 20 sont placés en outre deux conduits de liquide, à savoir un conduit froid 22 qui est en contact thermique avec l'évaporateur 12 et un conduit chaud 24 qui est en contact thermique avec le condenseur 14.

Le dispositif comprend en outre une première boucle 26 qui est située en dehors du compartiment technique CT et qui est destinée à être parcourue par un liquide. Cette première boucle intègre un échangeur de chaleur 28 (radiateur) auquel est associé un groupe moto-ventilateur 30, ainsi qu'une pompe 32 de circulation de liquide, qui est avantageusement une pompe électrique. Le radiateur 28 est, dans l'exemple, distinct du radiateur (non représenté) servant au refroidissement du moteur M du véhicule. Le groupe moto-ventilateur 30 permet de pulser un flux d'air (flèche F1) qui balaye l'échangeur de chaleur 28 pour refroidir, si nécessaire, le liquide circulant dans la boucle 26.

La boucle 26 est reliée aux conduits 22 et 24 par deux vannes 34 et 36 du type à quatre voies.

Ces deux vannes sont également reliées à une deuxième boucle 38 parcourue par un liquide sous l'action d'une pompe 40, qui est avantageusement une pompe électrique. La boucle 38 comprend un échangeur de chaleur 42 auquel est associé un pulseur 44. Ce pulseur permet d'envoyer un flux d'air dans l'habitacle H après avoir traversé l'échangeur 42 comme montré par la flèche F2. L'échangeur de chaleur 42 est du type air/liquide.

Les vannes 34 et 36 peuvent être amenées sélectivement dans deux positions différentes, à savoir une position de chauffage comme représenté sur la figure 1 et une position de refroidissement (ou position de climatisation) comme représenté sur la figure 2.

Dans la position de la figure 1, les vannes 34 et 36 mettent le conduit chaud 24 en communication de fluide avec la boucle 38, donc avec l'échangeur 42, d'une part, et le conduit froid 22 en communication de fluide avec la boucle 26, d'autre part.

Il en résulte que l'échangeur 42 est traversé par un liquide chaud (échauffé par le condenseur 14), ce qui permet d'envoyer un flux d'air chaud dans l'habitacle. Par contre, la boucle 26 est parcourue par un liquide froid.

La circulation du liquide chaud est représentée par les flèches C et celle du liquide froid par les flèches F sur la figure 1.

Le débit du liquide chaud dans la boucle 38 peut être ajusté en faisant varier le régime de la pompe 40.

Dans la position de refroidissement (ou position de climatisation) de la figure 2, les vannes 34 et 36 mettent la boucle 38 en communication avec le conduit froid 22, si bien que l'échangeur 42 est parcouru par un liquide froid, ce qui permet de refroidir ou réfrigérer l'habitacle du véhicule. En même temps, ces vannes mettent le conduit chaud 24 en communication avec la boucle 26, si bien que le radiateur 28 est parcouru par un fluide chaud. Il est alors avantageux de mettre en marche le groupe moto-ventilateur 30 pour dissiper la chaleur excédentaire véhiculée par le liquide chaud.

Comme dans la figure 1, la circulation du liquide chaud est représentée par les flèches C et celle du liquide froid par les flèches F.

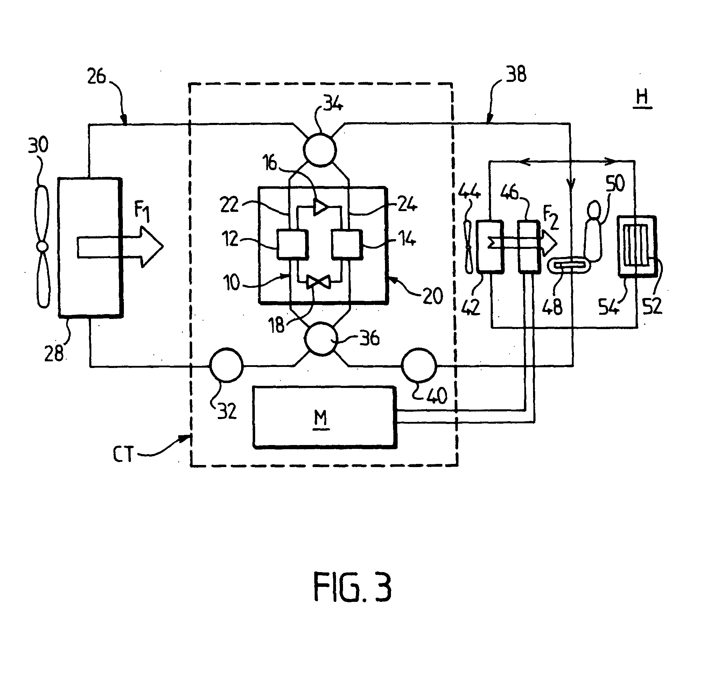

Dans la forme de réalisation de la figure 3, les éléments communs avec ceux des figures 1 et 2 sont désignés par les mêmes références numériques.

Dans cette variante de réalisation, on prévoit en outre un radiateur additionnel 46 qui est disposé à proximité de l'échangeur de chaleur 42 de sorte que le flux d'air, mis en mouvement par le pulseur 44, traverse successivement l'échangeur 42 et le radiateur additionnel 46.

Dans l'exemple, ce radiateur additionnel est propre à être échauffé par le moteur M du véhicule et, le cas échéant, par des auxiliaires dudit moteur.

Ce radiateur additionnel peut servir soit à fournir une chaleur d'appoint lorsque l'échangeur 42 fonctionne en mode chauffage, soit à réchauffer un flux d'air qui a préalablement été déshumidifié par l'échangeur 42, lorsque ce dernier fonctionne en mode de refroidissement. On peut également ajouter un radiateur électrique.

Dans la forme de réalisation représentée, on notera en outre que la deuxième boucle comprend deux autres échangeurs de chaleur supplémentaires, à savoir un échangeur 48 intégré dans au moins un siège 50 du véhicule et un échangeur 52 intégré dans un panneau 54.

Dans les différents modes de réalisation précités, le radiateur 28 est avantageusement distinct du radiateur de refroidissement du moteur, mais pourrait, en variante, faire partie de ce dernier.

En variante également, les vannes 34 et 36, au lieu d'être à quatre voies, pourraient être constituées par des vannes mélangeuses pour envoyer dans le circuit 38 un liquide résultant du mélange d'un liquide froid et d'un liquide chaud.

Les pompes 32 et 40 sont avantageusement des pompes électriques dont le régime peut être ajusté à volonté.

Selon l'invention, le liquide qui circule dans les deux boucles 26 et 38 et dans les conduits 22 et 24 est avantageusement de l'eau additionnée d'un antigel, par exemple de glycol.

Bien entendu, l'invention n'est pas limitée au mode de réalisation décrit précédemment à titre d'exemple et s'étend à d'autres variantes, sans pour autant sortir du cadre de l'invention comme défini dans les revendications.

## Revendications

1. Dispositif de chauffage-climatisation de l'habitacle d'un véhicule automobile, comprenant en combinaison :
un circuit fermé dans lequel un fluide réfrigérant circule entre un évaporateur et un condenseur ;
un conduit de liquide froid (22), dit "conduit froid", en contact thermique avec l'évaporateur (12) et un conduit de liquide chaud (24), dit conduit chaud, en contact thermique avec le condenseur (14) ;
une première boucle (26) parcourue par un liquide sous l'action d'une pompe (32) et comprenant un échangeur de chaleur (28) propre à être balayé par un fluide caloporteur, notamment par un flux d'air (F1) ;
une deuxième boucle (38) parcourue par un liquide sous l'action d'une pompe (40) et comprenant un échangeur de chaleur (42) propre à être balayé par un flux d'air (F2) à envoyer dans l'habitacle (H);
**caractérisé en ce que**
des moyens de commutation comprenant deux vannes à quatre voies (34, 36) sont interposés entre le conduit froid, le conduit chaud, la première boucle et la deuxième boucle et sont propres à être placés sélectivement : .soit dans une position de chauffage dans laquelle la première boucle (26) est en communication avec le conduit froid (22), tandis que la deuxième boucle (38) est en communication avec le conduit chaud (24), soit dans une position de refroidissement dans laquelle la première boucle (26) est en communication avec le conduit chaud (24), tandis que la deuxième boucle (38) est en communication avec le conduit froid (22).

2. Dispositif selon la revendication 1, **caractérisé en ce que** les moyens de commutation comprennent deux vannes mélangeuses.

3. Dispositif selon l'une des revendications 1 et 2, **caractérisé en ce qu'**il comprend un module (20) qui inclut le circuit fermé (10) de fluide réfrigérant, ainsi que le conduit froid (22) et le conduit chaud (24).

4. Dispositif selon l'une des revendications 1 à 3, dans lequel le circuit fermé (10) de fluide réfrigérant comprend en outre un compresseur (16), **caractérisé en ce que** ce compresseur est électrique.

5. Dispositif selon l'une des revendications 1 à 4, **caractérisé en ce qu'**il comprend un pulseur (44) associé à l'échangeur de chaleur (42) de la deuxième boucle (38) pour envoyer dans l'habitacle (H) un flux d'air (F2) ayant balayé cet échangeur de chaleur.

6. Dispositif selon l'une des revendications 1 à 5, **caractérisé en ce qu'**il comprend en outre un radiateur additionnel (46) propre à être échauffé par le moteur (M) du véhicule, ledit radiateur additionnel étant disposé à proximité de l'échangeur de chaleur (42) de la deuxième boucle de manière à être traversé par un même flux d'air (F2) envoyé dans l'habitacle (H).

7. Dispositif selon l'une des revendications 1 à 6, **caractérisé en ce que** la deuxième boucle (38) comprend en outre au moins un échangeur de chaleur supplémentaire (48, 52) parcourue par le même liquide.

8. Dispositif selon la revendication 7, **caractérisé en ce que** l'échangeur de chaleur supplémentaire (48) est intégré dans un siège (50) du véhicule.

9. Dispositif selon la revendication 7, **caractérisé en ce que** l'échangeur de chaleur supplémentaire (52) est intégré dans un panneau (54).

10. Dispositif selon l'une des revendications 1 à 9,
**caractérisé en ce que** l'échangeur de chaleur (28) de la première boucle (26) est distinct du radiateur de refroidissement du moteur (M) du véhicule.

## Claims

1. Heating and air conditioning apparatus for the cabin of a motor vehicle, comprising in combination:
a closed circuit in which a refrigerant fluid flows between an evaporator and a condenser;
a duct for cold liquid (22) called a "cold duct", in thermal contact with the evaporator (12), and a duct for hot liquid (24) called a "hot duct", which is in thermal contact with the condenser (14);
a first loop (26) through which a liquid is passed by the action of a pump (32), and which includes a heat exchanger (24) adapted to be swept by a heat-carrying fluid, in particular a stream of air (F1);
a second loop (38) through which a liquid is passed by the action of a pump (40), and which includes a heat exchanger (42) adapted to be swept by a stream of air (F2) to be delivered into the cabin (H);
**characterised in that** switching means, comprising two four-way valves (34, 36), are interposed between the cold duct, the hot duct, the first loop and the second loop, and are adapted to be put selectively, either into a heating position, in which the first loop (26) is in communication with the cold duct (22) while the second loop (38) is in communication with the hot duct (24), or into a cooling position, in which the first loop (26) is in communication with the hot duct (24) while the second loop (38) is in communication with the cold duct (22).

2. Apparatus according to Claim 1, **characterised in that** the switching means comprise two mixing valves.

3. Apparatus according to Claim 1 or Claim 2, **characterised in that** it comprises a module (20) which includes the closed refrigerant fluid circuit (10), together with the cold duct (22) and hot duct (24).

4. Apparatus according to one of Claims 1 to 3, wherein the closed refrigerant fluid circuit (10) further includes a compressor (16), **characterised in that** the compressor is electrical.

5. Apparatus according to one of Claims 1 to 4, **characterised in that** it includes a blower (44) associated with the heat exchanger (42) of the second loop (38), whereby to deliver into the cabin (H) an air stream (F2) which has swept the said heat exchanger.

6. Apparatus according to one of Claims 1 to 5, **characterised in that** it further includes an additional radiator (46) adapted to be supplied with heat by the engine (M) of the vehicle, the said additional radiator being disposed close to the heat exchanger (42) of the second loop whereby to be traversed by a common air stream (F2) delivered into the cabin (H).

7. Apparatus according to one of Claims 1 to 6, **characterised in that** the second loop (38) further includes at least one additional heat exchanger (48, 52) through which the same liquid passes.

8. Apparatus according to Claim 7, **characterised in that** the additional heat exchanger (48) is incorporated in a seat (50) of the vehicle.

9. Apparatus according to Claim 7, **characterised in that** the additional heat exchanger (52) is incorporated in a panel (54).

10. Apparatus according to one of Claims 1 to 9, **characterised in that** the heat exchanger (28) of the first loop (26) is distinct from the cooling radiator for the engine (M) of the vehicle.

## Patentansprüche

1. Fahrzeuginnenraum Heizklimaanlage, umfassend in Kombination:
einen geschlossenen Kreis, in welchem ein Kältemittelfluid zwischen einem Verdampfer und einem Kondensator zirkuliert;
eine Leitung (22) für kaltes Fluid, "Kaltleitung" genannt, in thermischem Kontakt stehend mit dem Verdampfer (12), sowie eine Leitung (24) für warmes Fluid, "Warmleitung" genannt, in thermischem Kontakt stehend mit dem Kondensator (14);
eine erste Schlaufe (26), die von einem Fluid unter Einwirkung einer Pumpe (32) durchlaufen wird und die einen Wärmetauscher (28) umfasst, der von einem Wärmeträgerfluid, insbesondere einer Luftströmung beziehungsweise einem Luftfluss (F1), überstrichen bzw. durchquert werden kann;
eine zweite Schlaufe (38), die von einem Fluid unter Einwirkung einer Pumpe (40) durchlaufen wird und die einen Wärmetauscher (42) umfasst, der von einer Luftströmung bzw. einem Luftfluss (F2) überstrichen bzw. durchquert werden kann, die bzw. der in den Innenraum (H) zu richten ist;
**dadurch gekennzeichnet, dass** Umschaltmittel, umfassend zwei Vierwegeventile (34, 36) zwischengelagert sind zwischen die Kaltleitung und die Warmleitung, wobei die erste Schlaufe und die zweite Schlaufe in der Lage sind, selektiv angeordnet zu werden in entweder einer Heizposition, bei welcher die erste Schlaufe (26) in Verbindung steht mit der Kaltleitung (22), während die zweite Schlaufe (38) in Verbindung steht mit der Warmleitung (24), oder einer Kühlposition, bei welcher die erste Schlaufe (26) in Verbindung steht mit der Warmleitung (24), während die zweite Schlaufe (38) in Verbindung steht mit der Kaltleitung (22).

2. Anlage nach Anspruch 1, **dadurch gekennzeichnet, dass** die Umschaltmittel zwei Mischventile umfassen.

3. Anlage nach einem der Ansprüche 1 und 2, **dadurch gekennzeichnet, dass** sie ein Modul (20) umfasst, welches den geschlossenen Kältemittelfluidkreis bzw. -kreislauf (10), sowie die Kaltleitung (22) und die Warmleitung (24) enthält.

4. Anlage nach einem der Ansprüche 1 bis 3, bei welcher der geschlossene Kältemittelfluidkreis oder -kreislauf (10) ferner einen Kompressor (16) umfasst, **dadurch gekennzeichnet, dass** der Kompressor elektrisch ist.

5. Anlage nach einem der Ansprüche 1 bis 4, **dadurch gekennzeichnet, dass** sie ein Gebläse (44) umfasst, dem Wärmetauscher (42) der zweiten Schlaufe (38) zugeordnet, um einen Luftfluss bzw. eine Luftströmung (F2), die diesen Wärmetauscher überstrichen bzw. durchquert hat, in den Innenraum (H) zu richten.

6. Anlage nach einem der Ansprüche 1 bis 5, **dadurch gekennzeichnet, dass** sie ferner einen Zusatzheizkörper (46) umfasst, geeignet, von dem Motor (M) des Fahrzeuges erwärmt zu werden, wobei der Zusatzheizkörper nahezu dem Wärmetauscher (42) der zweiten Schlaufe derart angeordnet ist, dass er von ein und demselben Luftfluss (F2) bzw. ein und derselben Luftströmung (F2) durchquert wird, die in den Innenraum (H) gerichtet bzw. geführt wird.

7. Anlage nach einem der Ansprüche 1 bis 6, **dadurch gekennzeichnet, dass** die zweite Schlaufe (38) ferner zumindest einen Zusatzwärmetauscher (48, 52) umfasst der von demselben Fluid durchlaufen wird.

8. Anlage nach Anspruch 7, **dadurch gekennzeichnet, dass** der Zusatzwärmetauscher (48) in einem Sitz (50) des Fahrzeugs integriert ist.

9. Anlage nach Anspruch 7, **dadurch gekennzeichnet, dass** der Zusatzwärmetauscher (52) in einem Paneel (54) integriert ist.

10. Anlage nach einem der Ansprüche 1 bis 9, **dadurch gekennzeichnet, dass** der Wärmetauscher (28) der ersten Schlaufe (26) getrennt bzw. distinkt zu dem Kühlheizkörper bzw. Wärmetauscher des Motors (M) des Fahrzeugs ausgebildet ist.
